## Europäisches Patentamt

## European Patent Office

## Office européen des brevets

(11) Veröffentlichungsnummer: **0 110 128**
**B1**

(12) # EUROPÄISCHE PATENTSCHRIFT

(45) Veröffentlichungstag der Patentschrift:
28.01.87

(51) Int. Cl.⁴: **C 04 B 11/02**

(21) Anmeldenummer: 83110689.3

(22) Anmeldetag: 26.10.83

(54) Kontinuierliches Verfahren zur Gewinnung von industriell verwertbarem Gips aus Industrie-Abfallgips.

(30) Priorität: 27.10.82 DE 3239669

(43) Veröffentlichungstag der Anmeldung:
13.06.84 Patentblatt 84/24

(45) Bekanntmachung des Hinweises auf die Patenterteilung:
28.01.87 Patentblatt 87/5

(84) Benannte Vertragsstaaten:
AT BE CH DE FR GB IT LI NL

(56) Entgegenhaltungen:
EP - A - 0 085 382
DE - A - 3 114 363

(73) Patentinhaber: Joh. A. Benckiser GmbH,
Benckiserplatz 1, D-6700 Ludwigshafen/Rh. 1 (DE)

(72) Erfinder: Klötzer, Erhard, Dr. Dipl.-Chem.,
Schauenburgstrasse 33, D-6901 Dossenheim (DE)
Erfinder: Fiand, Ulfert, Dr. Dipl.-Chem., Turnerstrasse 33,
D-6900 Heidelberg (DE)
Erfinder: Walther, Hans, Multring 19, D-6940 Weinheim
(DE)

(74) Vertreter: Patentanwälte Zellentin,
Zweibrückenstrasse 15, D-8000 München 2 (DE)

ACTORUM AG

## Beschreibung

Industrielle Abfallgipse fallen zumeist als sehr feinteilige, thixotrope Filterkuchen mit hohen Restfeuchten an (z.B. Phosphorsäure-, Citronensäure-, Rauchgasentschwefelungsgips) und enthalten sowohl anhaftende (interpartikuläre) als auch eingeschlossene (intrapartikuläre) Verunreinigungen. Eine Entfernung der anhaftenden Verunreinigungen z.B. durch Nachwaschung ist bei einem solch thixotropen Medium schwierig und erfordert erhebliche Wassermengen. Die eingeschlossenen Verunreinigungen sind nur durch Umkristallisation zu entfernen.

Doch selbst bei ausreichender Reinheit (bzw. Auswaschbarkeit) des Abfallgipses, z.B. Rauchgasgips, ist dieser aufgrund seiner Konsistenz und hohen Restfeuchte nur sehr schwer zu handhaben (Lagerung, Transport, Dosierung) und daher nicht direkt wiedereinsetzbar. Da die gipsverarbeitende Industrie sich im allgemeinen nicht nur auf die Verwertung von Abfallgips einstellen kann, ist sie gezwungen ihre Betriebe so zu bauen, dass Abfallgips und Naturgips auf den gleichen Anlagen allein oder in Mischung verarbeitet werden können. Der Abfallgips sollte also in einer Struktur anfallen, die ein ähnliches Handling (Transportieren, Fördern, Dosieren und Mahlen) wie der gebrochene Naturgips erfordert.

Je nach gewünschtem Wiedereinsatz des Abfallgipses werden bisher folgende Wege beschritten:

1. Als Dihydrat, z.B. als Zusatz zur Zementherstellung; der Gips wird, mit oder ohne Vorreinigung, einstufig getrocknet. Diese einstufige Trocknung ist bei der hohen Restfeuchte sehr energieintensiv; ausserdem muss das dabei entstehende feinteilige Dihydrat zum besseren Handling noch nachgranuliert werden.

In beiden Stufen ist z.T. mit einem beträchtlichen Feinstaubanteil zu rechnen.

2. Als Hemihydrat, z.B. für Gips-Bau oder -Formteile

a) Der Gips wird vorgereinigt und einstufig bis zum Hemihydrat getrocknet. Dieses Verfahren ist energetisch noch aufwendiger, da ausser der Restfeuchte noch 1,5 Kristallwasser entfernt werden müssen.

b) Der Gips wird in Wasser angeschlämmt und in einem Autoklaven, je nach gewünschter Struktur, bei Temperaturen von 115–180 °C und Verweilzeiten zwischen 0,5 und mehreren Stunden hydrothermisch zum α-Halbhydrat, evtl. unter Zusatz von Kristallbildnern, umgewandelt; dies kann sowohl diskontinuierlich als auch kontinuierlich ablaufen. Die umgesetzte Suspension wird abfiltriert und kann zusätzlich gewaschen werden. Auf die Weise können sowohl intra- als auch interpartikuläre Verunreinigungen entfernt werden. Der resultierende Filterkuchen wird zu Halbhydrat-Gips getrocknet. Dieses Verfahren ist jedoch im Hinblick auf Installationskosten und Energieverlust nicht vorteilhaft, da aufgrund der relativ hohen Verweilzeiten grosse Apparatevolumina, die auf Drücke bis ca. 15 bar ausgelegt werden müssen, notwendig sind und die Dispersion der wässrigen Aufschlämmung im Autoklaven eine Rührvorrichtung erfordert.

c) Gem. DE-OS 31 14 363 wurde auch schon versucht, α-Hemihydrat in einem Rohrreaktor (kontinuierlich) herzustellen. Nachteilig bei diesem Verfahren sind die dabei notwendigen niedrigen Konzentrationen der Feedsuspension (max. 30% bezogen auf Calciumsulfat). Infolge der im Feed vorliegenden unterschiedlichen Partikelgrössen ergeben sich dabei Sedimentationen der gröberen Teilchen, die zum Verstopfen führen.

Ziel der Erfindung ist es nun, ein kontinuierliches, einstufiges Verfahren bereitzustellen, das bei geringem konstruktivem Aufwand und mehrstufiger Energieausnutzung der Umwandlung von Industrie-Abfallgips in ein reines, staubfreies Calciumsulfat-Dihydrat-Granulat ermöglicht und bei geringer Variation der Anlage auch die Erzeugung von reinem Calciumsulfat-α-Hemihydrat erlaubt.

Es wurde gefunden, dass dieses Ziel dadurch erreicht werden kann, dass man Industrie-Abfallgips in einem Rohrreaktor unter Verwendung von Dampf teilweise oder vollständig hydrothermisch zu Calciumsulfat-α-Hemihydrat umwandelt.

Zur Vergleichmässigung der Kristallbildung und Vermeidung von Verstopfungen infolge Rücksedimentation oder Verkrustungen wird der Heissdampf direkt im Gleichstrom eingespritzt und die Gipssuspension, bei Strömungsgeschwindigkeiten von 5 bis 20 m/min, mindestens einmal senkrecht nach oben und unmittelbar anschliessend von oben nach unten geführt.

Der Umsetzungsgrad zum Calciumsulfat-α-Hemihydrat wird über die Einstellung der Verweilzeit im Bereich von 3 bis 20 min gesteuert.

Entscheidender Vorteil bei dieser Verfahrensweise ist, dass in den senkrechten Zweigen des Reaktors zunächst im aufsteigenden Teil voreilende feinteilige Kristalle im darauf folgenden, abfallenden Zweig langsamer absinken als die grobteiligen. Durch Wahl der geeigneten Strömungsverhältnisse gelingt somit eine weitgehende Vergleichmässigung der Verweilzeitverteilungen.

Ausserdem können im senkrechten Rohrreaktor die wachsenden Kristalle nicht auf die Reaktorwandung absinken und dort anbacken. Verbindet man die senkrechten Zweige kopf- und fusseitig miteinander, so kann innerhalb einer Kreislaufführung nahezu jede beliebige Verweilzeit eingestellt werden. Zweckmässigerweise wird dabei der Heissdampf von unten nach oben in den ersten Zweig eingegeben.

Die Gipssuspension hat eine Konzentration von 10–55 Gew.-%, vorzugsweise von 40–50 Gew.-% am Anfang des Verfahrens. Sie wird in der in Anspruch 3 aufgezeigten Weise unter Ausnutzung der Abwärme des Prozesses vorerwärmt und unter vergleichsweise geringem Energieaufwand umkristallisiert und aufgearbeitet.

Von besonderem Vorteil ist bei dem vorgeschlagenen Verfahren auch, dass die das Transportband verlassenden Stücke problemlos Naturgips zugemischt und mit diesem zusammen vermahlen und weiterverarbeitet werden können. Gleichzeitig ist auch eine deutliche Qualitätssteigerung des Gipses selbst zu beobachten.

Eine weitere Verbesserung der Wärme- und Wasserbilanz kann dadurch erreicht werden, dass man das bei der Calciumsulfat-Halbhydrat-Filtration gebildete heisse Filtrat absaugt und zur Waschung in die Filtrationsstufe für den Abfallgips rückführt und dass man das Bandfilter verlassende Waschfiltrat der Hemihydratstufe zur Maische leitet unter Aussteuerung eines Teils des Filtrats oder Frischwasserzusatz. Die günstigsten Prozessparameter sind in Kombination in Anspruch 6 enthalten.

Der vom Filter abgeworfene, zur Rückgewinnung der Reaktionsprodukte (z.B. Phosphorsäure, Citronensäure) vorgewaschene Abfallgips wird mit Wasser angeschlämmt und dann in den erfindungsgemässen Rohrreaktor eingespeist; im Gleichstrom dazu wird Dampf am Eingang des Reaktors eingeführt. Eine spezielle Mischvorrichtung ist nicht erforderlich. Temperatur und Verweilzeit werden so eingestellt, dass nach Verlassen des Strömungsrohrs ca. 60–80% des eingesetzten Dihydrats zu Hemihydrat umgewandelt sind; z.B. sind bei Temperaturen $\geq$ 140 °C nur wenige Minuten Verweilzeit erforderlich, da aufgrund des direkten Wärmeaustauschs (Dampf) die Aufheizung auf die gewünschte Temperatur spontan erfolgt.

Die Umsetzung wird bei Temperaturen von 130–180 °C, vorzugsweise 140–150 °C durchgeführt. Die Reaktoreingangstemperatur der Gipssuspension beträgt 20–95 °C, vorzugsweise 90–95 °C. Der Druck im Reaktor beträgt entsprechend der gewählten Temperatur 2,5–10 bar.

Bei Strömungsgeschwindigkeiten zwischen 5 und 20 m/min ist die Verweilzeit der Gipssuspension im Reaktor 3 bis 20 Minuten.

Nach Verlassen des Strömungsrohrs und Entspannung auf Atmosphärendruck wird die Suspension abfiltriert und bei Bedarf auf die gewünschte Reinheit gewaschen. Filtrations- und Waschleistung sind, wegen sich ergebender gegenüber dem Stand der Technik gleichmässigerer Korngrössenverteilung, sehr gut.

Der Filterkuchen wird auf ein Transportband abgeworfen; er ist bereits so stabil, dass über den Filter-Abwurfmechanismus eine gewünschte Stückgrösse eingestellt werden kann. Eine zusätzliche Granulation ist überraschenderweise nicht erforderlich, ebenso entfällt auch eine Zerkleinerungsstufe. Nach einer Verweilzeit von ca. 5–20 min auf dem Transportband sind die Stücke infolge teilweisem Abbinden des Hemihydrats unter Bildung von Calciumsulfat-Dihydrat soweit ausgehärtet, dass sie in dieser Form lagerfähig sind, ohne weiter zusammenzubacken.

Es liegen dann lagerstabile, reine, direkt einsetzbare Calciumsulfat-Dihydrat-Stücke mit einem Trockensubstanzgehalt von ca. 85–95% vor.

Wesentlich neben der direkten, staubfreien Erzeugung reiner Calciumsulfat-Dihydrat-Stücke hoher Trockensubstanz sind die mit diesem Verfahren gegebene Möglichkeit der mehrstufigen Energie- und Waschwasserausnutzung und die geringen Energieverluste in der Reaktionsstufe (Strömungsrohr), da diese aufgrund der nur kurzen Verweilzeit sehr klein gehalten werden kann und keine Mischvorrichtung erfordert.

Infolge des direkten Wärmeaustauschs tritt keine Verkrustung der Rohrwandung auf, da die Temperaturen im Wandbereich niedriger sind als im Rohrzentrum.

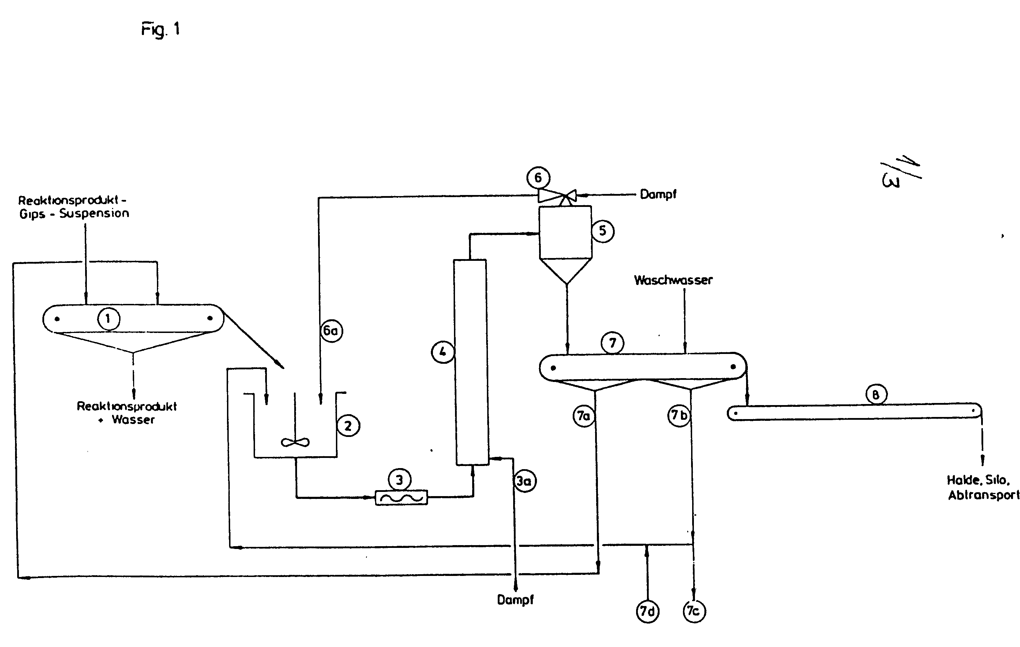

In Fig. 1 ist das erfindungsgemässe Verfahren schematisch dargestellt. Die im folgenden angegebenen Zahlenwerte sind als Beispiel einer bevorzugten Fahrweise zu verstehen und nicht als Einschränkung des Anwendungsbereichs des erfindungsgemässen Verfahrens. Die angegebenen Trockensubstanzwerte (TS) sind Gew.-% Calciumsulfat-Dihydrat.

Die aus der Schwefelsäure-Umsetzung kommende Reaktionsprodukt-Gips-Suspension (z.B. Phosphorsäure, Citronensäure) wird abfiltriert 1 und mit dem heissen Filtrat 7a gewaschen. Der so vorgewärmte Gipskuchen mit einer Trockensubstanz von etwa 50–75% wird in eine Maische 2 abgeworfen, wo er mit dem Waschfiltrat 7b angeschlämmt und durch Direktdampfeinspritzung 6a auf ca. 95 °C vorgeheizt wird. Die heisse Suspension wird über eine Hochdruckpumpe 3 in das Reaktionsrohr 4 eingeführt, wo die Umkristallisation im Temperaturbereich von 140–150 °C, bei Drücken von 5–7 bar und Verweilzeiten von ca. 2–7 min stattfindet. Die erforderliche Wärmeenergie wird über Direktdampfeinspritzung 3a eingetragen. Die so erzeugte Suspension, deren TS zu ca. 60–80% aus Calciumsulfat-Halbhydrat besteht, wird in dem Entspannungsgefäss 5 entspannt und mit einer Temperatur von ca. 95 °C auf Filter 7 geleitet. Bei dieser Entspannung wird, bis auf Abstrahlungs- und Drosselverluste, die dem Reaktionsrohr am Eintritt zugeführte Wärmeenergie als Dampf zurückgewonnen. Diese Brüden werden über einen Dampfinjektor 6 verdichtet und zur Aufheizung der Feed-Suspension in die Maische 2 zurückgeführt. Die in den Injektor 6 eingespeiste Menge Frischdampf wird so bemessen, dass die Feed-Suspension auf 95 °C aufgeheizt wird.

Das bei der Calciumsulfat-Halbhydrat-Filtration abgesaugte heisse Filtrat 7a wird zur Waschung zur Filtration 1 zurückgeführt, das Waschfiltrat zur Anmaischung des Filterkuchens von 1 in die Maische 2 zurückgeführt, wobei je nach erforderlicher Auswaschung und gewünschter Konzentration der Anmaischung ein Teil des Waschfiltrats ausgesteuert 7c oder Frischwasser zugesetzt wird 7d. Der Filterkuchen von 7 wird auf ein Transportband 8 abgeworfen, wo die Bruchstücke, deren Grösse über die Abwurfmechanismen gesteuert werden kann, bei einer Verweilzeit von ca. 5–20 min soweit aushärten, dass sie stabile, transport- oder lagerfähige Stücke bilden, die eine Trockensubstanz von ca. 85–95% haben.

Bei der vorgeschlagenen Waschwasserführung stellt sich in der Maische 2 eine Temperatur von ca. 35–45 °C ein, so dass man im allgemeinen mit einer Aufheizung der Feed-Suspension um ca. 50–60 °C rechnen muss.

Zur Erzeugung von reinen, direkt wiedereinsetzbaren Calciumsulfat-Dihydrat-Stücken aus Industrie-Abfallgips ist also, abgesehen von Abstrahlungs- und Drosselverlusten, nur die Wärmemenge erforderlich, die man benötigt, um die entsprechende Feed-Gipssuspension einstufig um ca. 50–60 °C aufzuheizen, eine Wasserverdampfung (Trocknung) ist nicht erforderlich.

Der erforderliche Energiebedarf ist also entscheidend von der Feed-Konzentration abhängig. Um bei möglichst hohen Feststoffgehalten im Feed ein gleichförmiges Produkt bei störungsfreiem Betrieb erzielen zu können, ist eine entsprechende Reaktionsführung im Rohrreaktor erforderlich; dabei sind Feststoffkonzentrationen bis ca. 55% erreichbar.

Zur Vermeidung einseitiger Ablagerungen an der Rohrwand muss das Rohrsystem senkrecht installiert werden. Die Strömungsgeschwindigkeit muss so hoch gewählt werden, dass keine Verstopfung durch Rücksedimentation gröberer Partikel erfolgt.

Das würde bei einem einzig, senkrecht stehenden Rohr bei den erforderlichen Verweilzeiten und den erwünschten hohen Konzentrationen zu beträchtlichen Bauhöhen und damit zu höheren Investitionskosten und einer erschwerten Handhabung der Anlage führen. Ausserdem ist dabei ein weites Kornspektrum infolge unterschiedlicher Relativgeschwindigkeiten verschieden schwerer Partikel nicht zu vermeiden.

Es wurde nun gefunden, dass durch mehrfache Auf- und Abwärtsführung des Strömungsrohrs dieser Effekt erheblich verringert werden kann, da die Klassierungsvorgänge in den auf- und abwärts führenden Rohrzügen gegenläufig verlaufen. Bei dieser Konstruktion sind für einen störungsfreien Betrieb nur noch geringere Strömungsgeschwindigkeiten erforderlich.

Damit wird zum einen die notwendige Gesamtlänge des Strömungsrohrs verkürzt, zum anderen die Bauhöhe um ein mehrfaches verringert.

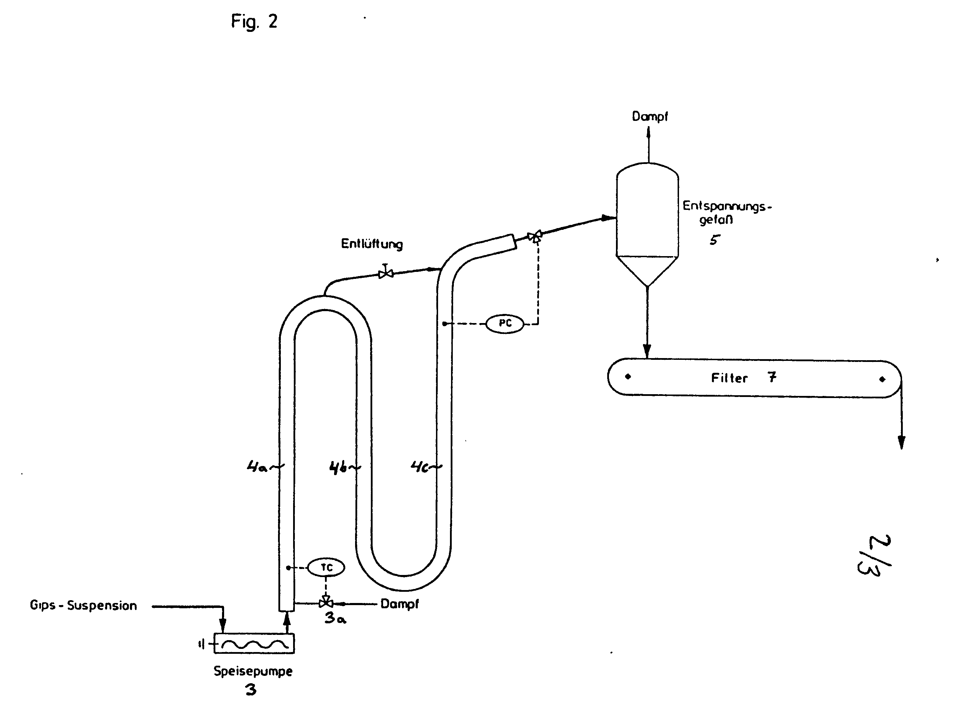

Fig. 2 zeigt als bevorzugte Ausführungsform einen dreizügigen Rohrreaktor.

Dampf und Gipssuspension werden in den aufsteigenden Ast 4a des Rohrsystems eingespeist, durchlaufen die drei Züge 4a–4c, das Reaktionsgemisch wird an der höchsten Stelle entspannt und dann direkt auf das Filter abgelassen. Die Entspannung an der höchsten Stelle hat zum einen den Vorteil einer ständigen, gleichmässigen Entlüftung des Rohrsystems, zum anderen steht eine ausreichende Fallhöhe zur direkten Versorgung des Filters zur Verfügung. Geht man z.B. von einer erforderlichen Verweilzeit von 4 min und einer Strömungsgeschwindigkeit von 8 m/min aus, so ergibt sich eine Rohrlänge von 32 m. Das führt zu einer Bauhöhe des Rohrsystems von ca. 10 m.

Das erfindungsgemässe Verfahren ist auch geeignet, reines Calciumsulfat-α-Hemihydrat aus Industrie-Abfallgips herzustellen.

Die gewünschten Strukturen und Qualitäten hängen u.a., wie literaturbekannt, von der Verweilzeit, der Temperatur und der Strömungsgeschwindigkeit ab.

Um diese Parameter unabhängig voneinander unter Verwendung ein und derselben Anlage einstellen zu können, ist nur eine geringe Modifikation der in Fig. 2 dargestellten Anlage erforderlich.

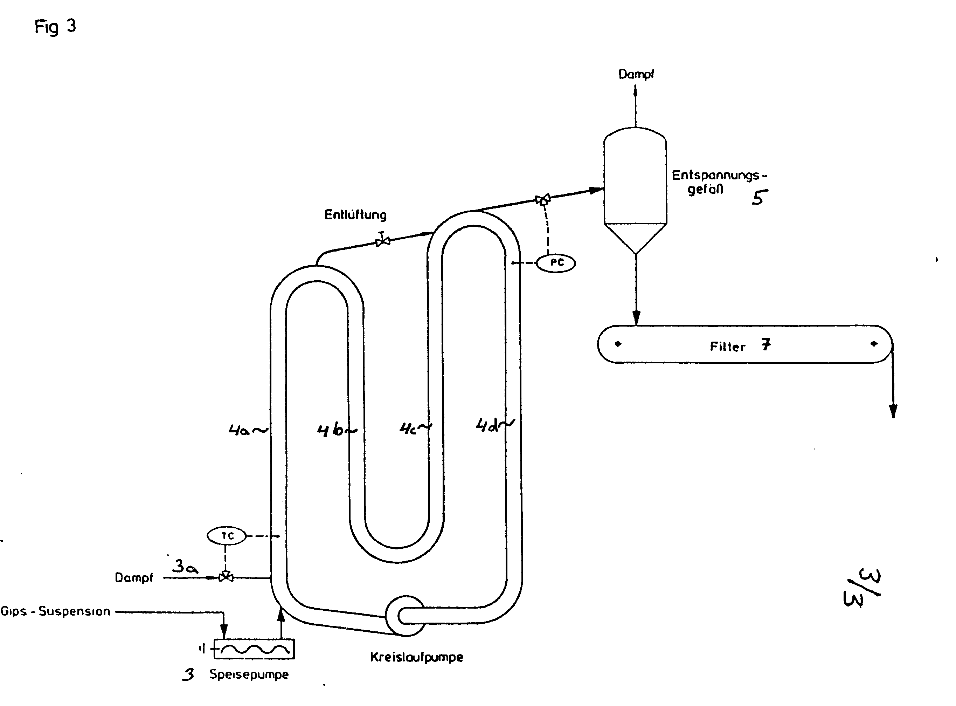

Eine solche Modifikation wird beispielsweise in Fig. 3 gezeigt. Ein Teil des Reaktionsgemischs wird vor der Entspannung abgezweigt und über den Zug 4d zum Feed zurückgeführt. In diesem Kreislaufsystem können dann die Strömungsgeschwindigkeit über die Kreislaufpumpe und die mittlere Verweilzeit über die Speisepumpe unabhängig voneinander eingestellt werden.

Je nach Bedarf können noch Kristallbildner in das Kreislaufsystem eingeschleust werden. Die so erzeugte Calciumsulfat-Hemihydrat-Suspension kann abfiltriert, der Filterkuchen bei Bedarf gewaschen und entweder sofort getrocknet oder angemaischt und in Formen verarbeitet oder unter Beimischung von Abbindeverzögerern als selbstnivellierender Estrich verwendet werden.

Selbstverständlich ist es auch im Sinne der Erfindung möglich, einen Kreislaufrohrreaktor mit nur je einem aufsteigenden und absteigenden Zweig einzusetzen.

Die nachstehenden Beispiele dienen zur näheren Erläuterung der Erfindung.

Beispiele 1 und 2

Zur Bestimmung des Kristallwassergehaltes wurden jeweils 200 g der den Reaktor verlassenden Suspension mit 500 ml Methanol innig verrührt. Die methanolhaltige Suspension wurde über eine Nutsche filtriert und der resultierende Filterkuchen im Trockenschrank bei 45 °C getrocknet. Die getrocknete Substanz wurde bei 500 °C geglüht. Der Glühverlust entspricht praktisch dem Kristallwassergehalt.

Die Trockensubstanz (als Calciumsulfat) der das Transportband verlassenden Filterkuchen wurde durch Glühen des Kuchens bei 500 °C bestimmt.

Der Citronensäuregehalt des Gipses wurde enzymatisch bestimmt.

Beispiel 1

Erzeugung von reinen, lagerstabilen Calciumsulfat-Dihydrat-Brocken

Abfallgips aus der Citronensäureproduktion mit ca. 1% Citronensäure bez. auf $CaSO_4$ wurde mit Wasser zu einer 45%igen Gipssuspension angemaischt und auf ca. 95 °C aufgeheizt.

Diese Suspension wurde in einen wie in Fig. 2 dargestellten, dreizügigen Rohrreaktor eingespeist und bei Eintritt durch Dampf-Direkteinspritzung spontan auf 145 °C aufgeheizt.

Der Rohrreaktor hatte eine Gesamtlänge von 42 m; der Rohrdurchmesser betrug 8,5 cm.

Die Gesamthöhe der Anlage betrug ca. 13 m.

Der Volumenstrom der Suspension (Dichte: 1,3 g/cm³) wurde auf 3 m³/h eingestellt.

Unter Berücksichtigung der Kondensatmenge ergab sich damit im Strömungsrohr eine lineare Strömungsgeschwindigkeit von ca. 9,5 m/min und damit eine Verweilzeit von ca. 4,4 min.

Die Reaktionssuspension wurde entspannt und bei ca. 95 °C auf einem Bandfilter abfiltriert, mit etwa 45% Wasser bez. auf $CaSO_4$ gewaschen und der resultierende Kuchen auf ein Transportband abgeworfen.

Die Brocken waren nach einer Verweilzeit von ca. 12 min auf dem Transportband soweit ausgehärtet, dass sie lagerstabil waren; auch nach mehrtägiger Lagerung in Containern waren sie nicht zusammengebacken, sondern unverändert misch- und dosierfähig.

Sie enthielten noch 0,99 Kristallwasser, was einer 67%igen Umwandlung des Gipses zum α-Hemihydrat entspricht; ihre TS betrug 91%, als Dihydrat gerechnet. Der Citronensäuregehalt, auf $CaSO_4$ bezogen, betrug 0,09%.

Beispiel 2

Erzeugung von reinem Calciumsulfat-α-Hemihydrat

Der in Beispiel 1 beschriebene Reaktor wurde, wie in Fig. 3 dargestellt, zu einem Kreislaufreaktor erweitert. Durch die Anfügung des Rückführungszweiges ergab sich eine Rohrlänge von 56 m. Als Feed wurde die gleiche Suspension wie in Beisp. 1 beschrieben verwendet und ebenfalls auf 95 °C aufgeheizt.

Von dieser Suspension wurden 2 m³/h in das Reaktionssystem eingespeist und durch direkte Dampfeinspritzung spontan auf 145 °C aufgeheizt. Das Kreislaufverhältnis wurde über die Kreislaufpumpe auf 2:1 eingestellt.

Unter Berücksichtigung der kondensierenden Dampfmenge ergab sich eine mittlere Verweilzeit im Gesamtsystem von ca. 8,8 min; die Strömungsgeschwindigkeit in den ersten drei Zügen des Reaktors betrug ca. 12 m/min, in dem vierten, fallenden Zug zur Kreislaufpumpe ca. 6 m/min.

Das Reaktionsgemisch wurde, wie in Beisp. 1 beschrieben, abfiltriert und gewaschen. Es wurden 98% des Gipses zum α-Hemihydrat umgesetzt; der Filterkuchen hatte bezüglich α-Hemihydrat eine Trockensubstanz von 80%. Der Citronensäuregehalt bez. auf $CaSO_4$ betrug 0,08%.

**Patentansprüche**

1. Kontinuierliches Verfahren zur Gewinnung von industriell verwertbarem Gips aus Industrie-Abfallgips durch teilweise oder vollständige hydrothermische Umwandlung von Abfallgips zu Calciumsulfat-α-Hemihydrat in einem Rohrreaktor unter Verwendung von Dampf bei Temperaturen von 130–180 °C dadurch gekennzeichnet, dass man zur Vergleichmässigung der Kristallbildung und Vermeidung von Rücksedimentation und Prozessunterbrechungen Heissdampf im Gleichstrom mit der Gipssuspension bei Strömungsgeschwindigkeiten von 5 bis 20 m/min mindestens einmal senkrecht nach oben und unmittelbar anschliessend von oben senkrecht nach unten führt und durch Verweilzeiten von 3 bis 20 min den Umsetzungsgrad steuert.

2. Verfahren nach Anspruch 1, dadurch gekennzeichnet, dass man die Reaktion in einem Kreislaufreaktor aus senkrecht angeordneten und miteinander verbundenen Reaktorzweigen durchführt, wobei Dampf und Suspension von unten in den ersten Zweig eingeführt werden.

3. Verfahren nach Anspruch 1 bis 2, dadurch gekennzeichnet, dass eine Gipssuspension mit einer Konzentration von etwa 10–55%, vorzugsweise 40–50% über eine Maische und eine Hochdruckpumpe zusammen mit dem Heissdampf in den Boden des Reaktors eingeführt und nach Verlassen des Reaktors einem Entspannungsgefäss zugeführt werden, wobei die entstehenden Brüden zur Vorheizung der Suspension in der Maische dienen, dass man die das Entspannungsgefäss verlassende Suspension auf einem Filter entwässert und entweder als Hemihydrat abzieht oder von z.B. einem Bandfilter mit einem, zur Bildung von Calciumsulfat-Dihydrat, ausreichendem Restwassergehalt im Filterkuchen auf ein Transportband unter Bildung von Bruchstükken abwirft zur Aushärtung unter Bildung von Calciumsulfat-Dihydrat 5–20 min auf dem Band verweilen lässt.

4. Verfahren nach Anspruch 1–3, dadurch gekennzeichnet, dass man das bei der Calciumsulfat-Halbhydrat-Filtration erhaltene heisse Filtrat absaugt und zur Waschung in die Filtrationsstufe für den Abfallgips rückführt.

5. Verfahren nach Anspruch 1–4, dadurch gekennzeichnet, dass man das das Bandfilter verlassende Waschfiltrat der Hemihydratstufe zur Maische leitet unter Aussteuerung eines Teils des Filtrats oder Frischwasserzusatz.

6. Verfahren nach Anspruch 1–5, gekennzeichnet durch eine Eingangskonzentration der Gipssuspension von 10–55, vorzugsweise 40–50 Gew.-%, einer Reaktoreingangstemperatur der Suspension von 20–95 °C, vorzugsweise 90–95 °C, einer Reaktortemperatur von 130–180 °C, vorzugsweise von 140–150 °C bei Drücken von 2,5–10 bar sowie Strömungsgeschwindigkeiten von 5–20 m/min und Verweilzeiten von 3–20 min.

7. Vorrichtung zur Durchführung des Verfahrens nach Anspruch 1–6, gekennzeichnet durch einen Rohrreaktor mit mindestens zwei senkrecht stehenden u-förmig verbundenen Zweigen (4), eintragsseitig angeschlossener Speisepumpe (3) und Dampfeinspritzung, (3a) vorgeschalteter Maische (2) mit Abdampfzuführung (6a) sowie Entspannungsvorrichtung (5) und Filter (7).

8. Vorrichtung nach Anspruch 7, dadurch gekennzeichnet, dass das Filter eine Vorrichtung aufweist, durch die beim Abwurf des Kuchens die gewünschte Brockengrösse eingestellt werden kann.

9. Vorrichtung nach Anspruch 7–8, gekennzeichnet durch eine Rückführung des Filtrats bzw. des Waschwassers auf ein Filter (1) für den angelieferten, umzukristallisierenden Gips, bzw. in die Maische (2).

10. Vorrichtung nach Anspruch 7–9, dadurch gekennzeichnet, dass der Reaktor aus drei Zweigen besteht, deren erster (4a) mit nach oben gerichteter Produktführung ausgelegt ist, wobei die Produktentnahme am Kopf des dritten Zweiges (4c) erfolgt und dass die u-förmige Verbindung zwischen erstem (4a) und zweitem (4b) Zweig mit einer Entlüftung versehen ist.

11. Vorrichtung nach Anspruch 10, gekennzeichnet durch eine teilweise Produktrückführung.

12. Vorrichtung nach Anspruch 7–9, dadurch gekennzeichnet, dass vier senkrechte Zweige vorgesehen sind, wobei die ersten beiden (4a, b) und die letzten beiden (4c, d) kopfseitig, die mittleren (4b, c) fusseitig und die äusseren (4a, d) zur Herstellung eines Kreislaufes ebenfalls fusseitig über eine Kreislaufpumpe miteinander verbunden sind und dass der Produktabzug vorzugsweise am Kopf des dritten oder vierten Zweiges angeordnet ist.

## Revendications

1. Procédé en continu pour la récupération de sulfate de calcium ou gypse industriellement valorisable à partir de gypse résiduaire industriel par transformation hydrothermique partielle ou complète du gypse résiduaire en hémihydrate-α de sulfate de calcium dans un réacteur tubulaire avec utilisation de vapeur d'eau à des températures de 130 à 180 °C, procédé caractérisé en ce que, pour homogénéiser la formation de cristaux, et éviter une sédimentation à nouveau et des interruptions opératoires, on fait circuler de la vapeur d'eau dans le même sens que la suspension de gypse à des vitesses d'écoulement de 5 à 20 m/min au moins une fois verticalement vers le haut et immédiatement ensuite verticalement de haut en bas et en ce qu'on règle le degré de réaction en faisant varier les temps de séjour entre 3 et 20 minutes.

2. Procédé selon la revendication 1, caractérisé en ce qu'on conduit la réaction dans un réacteur en circuit fermé constitué de tronçons de réacteur disposés verticalement et reliés ensemble, la vapeur d'eau et la suspension étant introduites par le bas par le premier tronçon.

3. Procédé selon la revendication 1 ou 2, caractérisé en ce qu'on introduit une suspension de gypse à une concentration d'environ de 10 à 55%, avantageusement de 40 à 50%, en passant par un récipient mélangeur et une pompe à haute pression, avec la vapeur d'eau chaude, dans le corps du réacteur et, quand la suspension a quitté le réacteur, on achemine à un récipient de détente les vapeurs résultantes servant à préchauffer la suspension dans le récipient mélangeur, en ce qu'on élimine sur un filtre l'eau de la suspension sortant du récipient de détente et en ce qu'on retire le produit sous forme d'hémihydrate ou on le déverse par exemple d'une bande filtrante, ce produit ayant une teneur en eau résiduelle suffisante pour former du dihydrate de sulfate de calcium sous forme de gâteau de filtre sur une bande transporteuse avec formation de morceaux fractionnés et on laisse le produit séjourner durant 5 à 20 minutes sur la bande pour qu'ils durcissent avec formation de sulfate de calcium dihydraté.

4. Procédé selon l'une des revendications 1 à 3, caractérisé en ce qu'on obtient par succion un filtrat chaud lors de la filtration du sulfate de calcium hémihydraté et l'on recycle ce filtrat pour effectuer à l'étape de filtration le lavage du gypse résiduaire.

5. Procédé selon l'une des revendications 1 à 4, caractérisé en ce qu'on achemine vers le récipient mélangeur le filtrat de lavage provenant de la bande filtrante du produit à l'état d'hémihydrate en réglant le niveau d'une partie du filtrat ou en ajoutant de l'eau fraîche.

6. Procédé selon l'une quelconque des revendications 1 à 5, caractérisé par une concentration initiale de la suspension de gypse de 10 à 55, avantageusement 40 à 50% en poids, une température de la suspension à l'entrée du réacteur de 20 à 95 °C, avantageusement 90 à 95 °C, une température de réacteur de 130 à 180 °C, avantageusement de 140 à 150 °C sous des pressions de 2,5 à 10 bars ainsi que par des vitesses d'écoulement de 5 à 20 m/min et des temps de séjour de 3 à 20 minutes.

7. Appareillage pour la mise en œuvre du procédé selon l'une quelconque des revendications 1 à 6, caractérisé en ce qu'il comporte un réacteur tubulaire ayant au moins deux branches (4) verticales, reliées en U, réacteur relié du côté de son entrée à une pompe (3) d'alimentation et à un dispositif (3a) d'injection de vapeur, avec, en amont, un récipient mélangeur (2) auquel est acheminée (6a) de la vapeur résiduaire, l'appareillage comportant également un dispositif de détente (5) et un filtre (7).

8. Appareillage selon la revendication 7, caractérisé en ce que le filtre comporte un dispositif permettant d'ajuster la grosseur voulue des morceaux lors du déversement du gâteau de filtre.

9. Appareillage selon l'une des revendications 7 et 8, caractérisé en ce qu'il comporte un recyclage du filtrat ou de l'eau de lavage vers un filtre (1) pour le gypse arrivant et destiné à recristallisation, ou un recyclage vers le récipient mélangeur (2).

10. Appareillage selon l'une des revendications 7 à 9, caractérisé en ce que le réacteur consiste en trois branches dont la première (4a) est disposée de manière à acheminer le produit vers le haut, le retrait du produit s'effectuant en tête de la troisième branche (4c) et en ce que la liaison en U entre les première (4a) et seconde (4b) branches est pourvue d'un dispositif de purge d'air.

11. Appareillage selon la revendication 10, caractérisé en ce qu'il comporte un dispositif de recyclage partiel du produit.

12. Appareillage selon l'une quelconque des revendications 7 à 9, caractérisé en ce qu'il est prévu quatre branches verticales dont les deux premières (4a, 4b) et les deux dernières (4c, 4d) sont reliées ensemble en tête, les branches moyennes (4b, 4c) sont reliées à leurs pieds et les branches externes (4a et 4d) sont reliées également à leurs pieds pour former un circuit passant par une pompe de circulation et en ce que le retrait du produit est réalisé de préférence en tête de la troisième ou de la quatrième branche.

**Claims**

1. A continuous process for recovering industrially utilizable gypsum from industrial waste gypsum by partial or complete hydrothermic conversion of waste gypsum into calcium sulphate-α-hemihydrate in a tube reactor using steam at temperatures of between 130 and 180 °C, characterized in that, in order to make the crystallization uniform and to avoid reverse sedimentation and interruptions in the process, hot steam is passed at least once vertically upwards in parallel flow with the gypsum suspension with a flow velocity of between 5 and 20 m/min and immediately afterwards vertically downwards from above, and the degree of conversion is controlled by dwell periods of between 3 and 20 min.

2. A process according to Claim 1, characterized in that the reaction is performed in a circulation reactor comprising vertically-arranged and interconnected reactor branches, the steam and suspension being introduced into the first branch from below.

3. A process according to Claims 1 and 2, characterized in that a gypsum suspension with a concentration of approximately between 10 and 55%, preferably between 40 and 50%, is introduced into the base of the reactor by way of a crystallizer and a high-pressure pump together with the hot steam and is conveyed to a relaxation vessel after leaving the reactor, the vapours produced being used for pre-heating the suspension in the crystallizer, the suspension leaving the relaxation vessel is de-watered on a filter and is either drawn off as a hemihydrate or is discarded onto a conveyor belt by a band filter for example with a residual water content sufficient for forming calcium sulphate dihydrate in the filter cake while forming fragments, [and] for hardening purposes while forming calcium sulphate dihydrate is allowed to stand between 5 and 20 mins on the belt.

4. A process according to Claims 1 to 3, characterized in that the hot filtrate produced during calcium sulphate hemihydrate filtration is sucked away and returned to the filtration stage for the waste gypsum for washing purposes.

5. A process according to Claims 1 to 4, characterized in that the washing filtrate of the hemihydrate stage leaving the band filter is passed to the crystallizer while balancing out part of the filtrate or fresh water addition.

6. A process according to Claims 1 to 5, characterized by an initial concentration of the gypsum suspension of between 10 and 55%, preferably between 40 and 50%, by weight, an initial reactor temperature of the suspension of between 20 and 95 °C, preferably between 90 and 95 °C, a reactor temperature of between 130 and 180 °C, preferably between 140 and 150 °C at pressures of between 2.5 and 10 bar and flow velocities of between 5 and 20 m/min and dwell periods of between 3 and 20 min.

7. An apparatus for performing the process according to Claims 1 to 6, characterized by a tube reactor with at least two branches (4) arranged upright and connected in a U shape, a feed pump (3) connected at the feed end and a steam injection means (3a), a crystallizer (2) disposed upstream and having a waste steam supply (6a) and a relaxation apparatus (5) and a filter (7).

8. An apparatus according to Claim 7, characterized in that the filter has an apparatus by means of which the desired lump size can be set when discarding the cake.

9. An apparatus according to Claims 7 and 8, characterized by a returning of the filtrate and the wash water to a filter (1) for the delivered gypsum to be recrystallized and into the crystallizer (2) respectively.

10. An apparatus according to Claims 7 to 9, characterized in that the reactor comprises three branches, the first (4a) of which is constructed with an upwardly directed guide for the product, the product being removed at the head of the third branch (4c), and the U-shaped connexion between the first (4a) and the second (4b) branch is provided with a vent.

11. An apparatus according to Claim 10, characterized by a partial returning means for the product.

12. An apparatus according to Claims 7 to 9, characterized in that four vertical branches are provided, the first two (4a, b) and the last two (4c, d) being provided at the head end, the middle ones (4b, c) being provided at the foot end and the outer ones (4a, d) for producing a circulation being connected together likewise at the foot end by way of a circulation pump, and the outlet for the product is preferably disposed at the head of the third or fourth branch.

0 110 128

Fig. 1

Reaktionsprodukt - Gips - Suspension

Reaktionsprodukt + Wasser

Dampf

Waschwasser

Halde, Silo, Abtransport

Dampf

Fig. 2

3/3

Fig 3

Entspannungs-gefäß 5

Filter 7

Dampf

PC

4d

4c

4b

4a

Entlüftung

Kreislaufpumpe

Speisepumpe

3 Speisepumpe

TC

3a

Dampf

Gips - Suspension